# EUROPEAN PATENT APPLICATION

(11) **EP 4 666 858 A1**
(43) Date of publication of application: **24.12.2025**
(21) Application number: 23923004.8
(22) Date of filing: 24.03.2023
(51) Int. Cl.: A21D 8/04, A21D 2/08, A21D 8/06, A21D 6/00, A21D 15/02, A21D 13/00, A21B 3/00

(54) **METHOD FOR MANUFACTURING BAGEL, AND BAGEL FORMED THEREBY**

(30) Priority: 16.02.2023 KR 20230020586
(71) Applicant: Paris Croissant Co., Ltd., Seongnam-si, Gyeonggi-do 13220 (KR)
(72) Inventor: LEE, Dong Jae, Seoul 06737 (KR); KIM, Ki Soo, Seoul 06737 (KR); LEE, Young Sun, Seoul 06737 (KR); JHUNG, Sang Won, Seoul 06737 (KR); CHOI, Yun Hee, Seoul 06737 (KR); BYUN, Kyoung Sub, Seoul 06737 (KR); SHIN, Min Sik, Seoul 06737 (KR); KIM, Myung Sub, Seoul 06737 (KR)
(74) Representative: Petraz, Gilberto Luigi
(86) International application number: PCT/KR2023/003912
(87) International publication number: WO 2024/172202

(57) **Abstract**

The present invention provides a method for producing a bagel, and a bagel formed thereby, wherein the method includes a kneading step of mixing bagel ingredients including tangzhong, flour, sugar, salt, Sangmi starter, butter, yeast, and water to form dough, a resting step of portioning the dough and then resting the portioned dough, a shaping step of molding the rested dough into a bagel shape, a fermentation step of fermenting the molded dough, a blanching step of blanching the fermented dough in boiling water, a baking step of baking the blanched dough in an oven, and a cooling step of cooling the baked dough, wherein the tangzhong includes flour, sugar, salt, and water.

## Description

### TECHNICAL FIELD

The present invention relates to a method for producing a bagel, and a bagel produced thereby.

### BACKGROUND ART

A bagel is a doughnut-shaped bread generally made by mixing flour, yeast, water, salt, and the like, and has become internationally known because of Jews who immigrated to the eastern part of the United States. Unlike a doughnut, which has a similar shape, the bagel is not deep-fried in oil, uses less sugar and fat than regular bread, and is easy to digest and has a light taste, making it pair well with any ingredient such as meat, cheese, butter, jam, salad, and smoked salmon.

Typically, bagels produced in large quantities are produced by mixing strong flour, salt, sugar, and yeast with water to make dough, and then subjecting the dough to processes of resting, portioning, molding, rapid cooling, storing, thawing, fermenting, and baking.

However, a typical bagel ages quickly, and thus if the bagel is not consumed immediately after baking, it is not possible to taste its original texture, and accordingly, there is a problem in that it is difficult to store the bagel for a long period of time. In addition, since the baking state between the outside and inside of a typical bagel is not properly balanced, it is difficult to enjoy a chewy texture.

### DISCLOSURE OF THE INVENTION

### TECHNICAL PROBLEM

An embodiment provides a method for producing a bagel having excellent chewy and moist texture and flavor, and a method for producing a bagel, wherein the bagel has excellent appearance and color.

Another embodiment provides a bagel formed by the above-described method for producing a bagel.

### TECHNICAL SOLUTION

An embodiment provides a method for producing a bagel, wherein the method includes a kneading step of mixing bagel ingredients including tangzhong, flour, sugar, salt, Sangmi starter, butter, yeast, and water to form dough, a resting step of portioning the dough and then resting the portioned dough, a shaping step of molding the rested dough into a bagel shape, a fermentation step of fermenting the molded dough, a blanching step of blanching the fermented dough in boiling water, a baking step of baking the blanched dough in an oven, and a cooling step of cooling the baked dough, wherein the tangzhong includes flour, sugar, salt, and water.

The tangzhong is obtained by including the steps of mixing the flour, the sugar, the salt, and hot water of 90 °C to 100 °C to form tangzhong dough, and aging the tangzhong dough at a temperature of 0 °C to 10 °C for 10 hours to 18 hours.

The tangzhong may be mixed into the bagel ingredients within 0 to 48 hours after the aging.

The tangzhong may include 40 wt% to 55 wt% of the flour, 4 wt% to 6 wt% of the sugar, 0.2 wt% to 1 wt% of the salt, and the remainder being the water.

The tangzhong may be included in an amount of 15 wt% to 40 wt% based on the total amount of the bagel ingredients.

The Sangmi starter may include flour, whole wheat flour, yeast, lactic acid bacteria, and water.

The yeast included in the Sangmi starter may specifically be *Saccharomyces cerevisiae* SPC-SNU 70-1(KCTC 12776BP).

The lactic acid bacteria included in the Sangmi starter may specifically be a mixture of any one or more selected from the group consisting of *Levilactobacillus brevis* SPC-SNU 70-2(KCTC 12777BP), *Latilactobacillus curvatus* SPC-SNU 70-3(KCTC 12778BP), *Fructilactobacillus sanfranciscensis* SPC-SNU 70-4(KCTC 12779BP), and *Lactiplantibacillus plantarum* SPC-SNU 72-1(KCTC13314BP), and may more specifically be a combination thereof.

The Sangmi starter may include 35 wt% to 45 wt% of the flour, 1.5 wt% to 3 wt% of the whole wheat flour, 0.05 wt% to 0.2 wt% of the yeast, 0.01 wt% to 0.1 wt% of the lactic acid bacteria, and the remainder being the water.

The Sangmi starter may be obtained by including the steps of mixing flour, whole wheat flour, yeast, lactic acid bacteria, and water to form Sangmi starter dough, fermenting the Sangmi starter dough at a temperature of 25 °C to 29 °C for 4 hours to 8 hours, cooling the fermented Sangmi starter dough, and aging the cooled Sangmi starter dough at a temperature of 6 °C to 10 °C for 12 hours to 16 hours.

The Sangmi starter is managed at a pH of 3.8±0.1, and an acidity(%) of 0.9 ±0.15.

The bagel ingredients may include 15 wt% to 40 wt% of the tangzhong, 30 wt% to 50 wt% of the flour, 2.5 wt% to 5.0 wt% of the sugar, 0.5 wt% to 1.5 wt% of the salt, 1.5 wt% to 3.5 wt% of the Sangmi starter, 1.5 wt% to 5.0 wt% of the butter, 0.5 wt% to 1.5 wt% of the yeast, and the remainder being the water.

The bagel ingredients may further include a processed cereal product, a bread improver, or a combination thereof.

The fermentation step may perform fermentation on the molded dough in a fermentation chamber to 50 vol% to 100 vol% based on the volume of a finished product, wherein the fermentation chamber may have a temperature of 25 °C to 35 °C and a relative humidity of 30% to 90%.

The blanching step may be a process of dipping the fermented dough in and out of water of 90 °C to 100 °C for 20 seconds to 120 seconds.

The oven may have the bottom made of a steel plate, a stone plate, or a combination thereof.

The baking step may be a process of performing baking in an oven at a temperature of 200 °C to 300 °C for 5 minutes to 15 minutes.

The baking step may be a process of performing baking in an oven at a top heat temperature of 240 °C to 290 °C and a bottom heat temperature of 210 °C to 230 °C.

The cooling may be performed at a temperature of 20 °C to 35 °C for 5 minutes to 60 minutes.

Another embodiment provides a bagel formed by the above-described method for producing a bagel.

The bagel may have a moisture content of 30 wt% to 50 wt%.

### ADVANTAGEOUS EFFECTS

A bagel produced by a method according to an embodiment has excellent chewy and moist texture and flavor as well as excellent appearance and color, and thus has an increased product value.

### BRIEF DESCRIPTION OF THE DRAWINGS

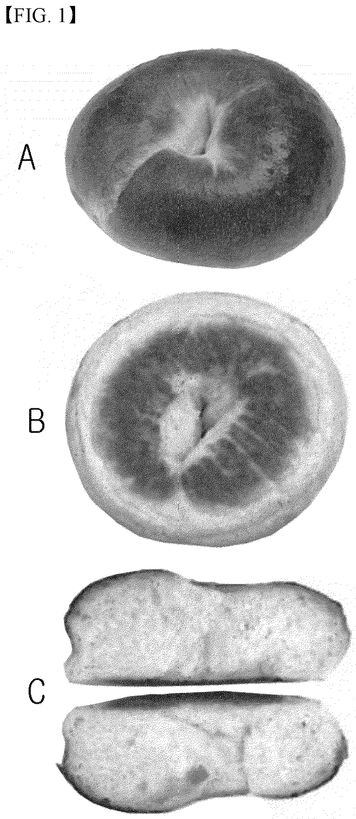

FIG. 1 is a photograph image of a bagel produced according to Example 1. A represents an upper surface of the bagel, B represents a lower surface of the bagel, and C represents a cross-section of the bagel.

### BESTMODE FOR CARRYING OUT THE INVENTION

Hereinafter, embodiments will be described in detail to be easily carried out by those skilled in the art. However, the embodiments may be embodied in many different forms and the present invention is not limited to the embodiments described herein.

A method for producing a bagel according to an embodiment includes a kneading step of mixing bagel ingredients including tangzhong, flour, sugar, salt, Sangmi starter, butter, yeast, and water to form dough, a resting step of portioning the dough and then resting the portioned dough, a shaping step of molding the rested dough into a bagel shape, a fermentation step of fermenting the molded dough, a blanching step of blanching the fermented dough in boiling water, a baking step of baking the blanched dough in an oven, and a cooling step of cooling the baked dough. A bagel produced by the above-described method has excellent chewy and moist texture and flavor as well as excellent appearance and color, and thus may have a high product value.

First, the kneading step is a step for mixing bagel ingredients to form dough.

The bagel ingredients include tangzhong, flour, sugar, salt, Sangmi starter, butter, yeast, and water.

Among the bagel ingredients, the tangzhong includes flour, sugar, salt, and water,

Specifically, the tangzhong may be obtained through the steps of mixing flour, sugar, salt, and hot water to form tangzhong dough, and aging the formed tangzhong dough.

In this case, the flour may be strong flour, plain flour, soft flour, or a combination thereof, but is not limited thereto, and the salt may be sea salt, but is not limited thereto. The hot water refers to hot water of 90 °C to 100 °C, for example, hot water of 92 °C to 99 °C.

The aging may be performed at a temperature of 0 °C to 10 °C, for example, at a temperature of 2 °C to 8 °C, for 10 hours to 18 hours, for example, 12 hours to 14 hours. If the tangzhong dough is aged within the above-described temperature range and the above-described time range, it is possible to obtain tangzhong having excellent glutinous consistency, and accordingly, it is possible to obtain a bagel having excellent chewy and moist texture and excellent flavor by using the tangzhong as a bagel ingredient.

The tangzhong may be used in the production of a bagel by being mixed into the bagel ingredients within 0 to 48 hours, for example, within 1 hour to 30 hours after the aging. If used within the above-described time range after the aging, it is possible to obtain tangzhong having glutinous consistency and firmness, and accordingly, it is possible to obtain a bagel having excellent chewy and moist texture and excellent flavor by using the tangzhong as a bagel ingredient.

When producing the tangzhong, 40 wt% to 55 wt% of flour, 4 wt% to 6 wt% of sugar, 0.2 wt% to 1 wt% of salt, and the remainder being water are mixed to obtain tangzhong composed of the above-described composition. For example, 42 wt% to 50 wt% of flour, 4.2 wt% to 5.0 wt% of sugar, 0.4 wt% to 0.5 wt% of salt, and the remainder being water may be mixed. If tangzhong is composed within the above-described composition range, it is possible to obtain tangzhong having glutinous consistency and firmness, and accordingly, it is possible to obtain a bagel having excellent chewy and moist texture and excellent flavor by using the tangzhong as a bagel ingredient.

The tangzhong may be included in an amount of 15 wt% to 40 wt%, for example, 20 wt% to 38 wt% based on the total amount of the bagel ingredients. If the tangzhong is included within the above-described content range, it is possible to obtain tangzhong having glutinous consistency and firmness, and accordingly, it is possible to obtain a bagel having excellent chewy and moist texture and excellent flavor by using the tangzhong as a bagel ingredient.

Among the bagel ingredients, the flour may be strong flour, plain flour, soft flour, or a combination thereof, but is not limited thereto, and among the bagel ingredients, the salt may be sea salt, but is not limited thereto.

Among the bagel ingredients, the Sangmi starter may include flour, whole wheat flour, yeast, lactic acid bacteria, and water.

The yeast included in the Sangmi starter may specifically be *Saccharomyces cerevisiae* SPC-SNU 70-1(KCTC 12776BP).

The lactic acid bacteria included in the Sangmi starter may specifically be a mixture of any one or more selected from the group consisting of *Levilactobacillus brevis* SPC-SNU 70-2(KCTC 12777BP), *Latilactobacillus curvatus* SPC-SNU 70-3(KCTC 12778BP), *Fructilactobacillus sanfranciscensis* SPC-SNU 70-4(KCTC 12779BP), and *Lactiplantibacillus plantarum* SPC-SNU 72-1(KCTC13314BP), and may more specifically be a combination thereof.

Specifically, the Sangmi starter may include 35 wt% to 45 wt% of the flour, 1.5 wt% to 3 wt% of the whole wheat flour, 0.05 wt% to 0.2 wt% of the yeast, 0.01 wt% to 0.1 wt% of the lactic acid bacteria, and the remainder being the water.

The Sangmi starter may be obtained through the steps of mixing flour, whole wheat flour, yeast, lactic acid bacteria, and water to form Sangmi starter dough, fermenting the Sangmi starter dough at a temperature of 25 °C to 29 °C for 4 hours to 8 hours, cooling the fermented Sangmi starter dough, and aging the cooled Sangmi starter dough at a temperature of 6 °C to 10 °C for 12 hours to 16 hours.

The bagel ingredients may include 15 wt% to 40 wt% of the tangzhong, 30 wt% to 50 wt% of the flour, 2.5 wt% to 5.0 wt% of the sugar, 0.5 wt% to 1.5 wt% of the salt, 1.5 wt% to 3.5 wt% of the Sangmi starter, 1.5 wt% to 5 wt% of the butter, 0.5 wt% to 1.5 wt% of the yeast, and the remainder being the water. For example, the bagel ingredients may include 15 wt% to 40 wt% of the tangzhong, 30 wt% to 45 wt% of the flour, 2.5 wt% to 5.0 wt% of the sugar, 0.5 wt% to 1.5 wt% of the salt, 1.5 wt% to 3.5 wt% of the Sangmi starter, 1.5 wt% to 5 wt% of the butter, 0.5 wt% to 1.5 wt% of the yeast, and the remainder being the water, and more specifically, the bagel ingredients may include 20 wt% to 38 wt% of the tangzhong, 30 wt% to 42 wt% of the flour, 3.0 wt% to 4.0 wt% of the sugar, 0.8 wt% to 1.3 wt% of the salt, 2.5 wt% to 3.0 wt% of the Sangmi starter, 2.5 wt% to 5 wt% of the butter, 0.6 wt% to 1.4 wt% of the yeast, and the remainder being the water, If the bagel ingredients are included within the above-described content ranges, it is possible to obtain a bagel having excellent chewy and moist texture and excellent flavor.

The bagel ingredients may further include a processed cereal product, a bread improver, or a combination thereof.

The processed cereal product may be a hardness regulator. The processed cereal product may be included in an amount of 0.01 wt% to 0.2 wt%, for example, 0.05 wt% to 0.14 wt% based on the total amount of the bagel ingredients.

The bread improver may be a composite oxidizer, an emulsifier, an enzyme preparation, or the like. The bread improver may be included in an amount of 0.2 wt% to 0.8 wt%, for example, 0.3 wt% to 0.7 wt% based on the total amount of the bagel ingredients.

Secondly, in the resting step, the formed dough is portioned and then rested such that the portioned dough can recover. The resting may be performed, for example, for 10 minutes to 50 minutes, or 20 minutes to 40 minutes.

Thirdly, in the shaping step, the rested dough is molded into a bagel shape, that is, a doughnut shape having a hole in the center.

Fourthly, the fermentation step is a process of performing fermentation on the molded dough, and may perform the fermentation to 50 vol% to 100 vol%, for example, 60 vol% to 95 vol% based on the volume of a finished product. In this case, the temperature of the fermentation chamber may be 25 °C to 35 °C, for example, 26 °C to 32 °C, and the relative humidity thereof may be 30% to 90%, for example, 35% to 85%. If the fermentation is performed under the conditions within the above-described ranges, it is possible to obtain a bagel having excellent chewy and moist texture and excellent flavor.

Fifthly, the blanching step is a process of blanching the fermented dough in boiling water.

Through the blanching process in boiling water, yeast on the surface of bread dies and enzymes of yeast inside the bread become active, achieving baking with a smooth and dense surface, and pores inside the bread become tight, creating a unique chewy texture. Due to its characteristics, a bagel has low hydration and a lean formula, resulting in rapid aging of starch, but blanching helps delaying the aging of the starch and increases the shelf-life of the bagel.

Specifically, the blanching process may be a process in which the fermented dough is dipped in and out of water of 90 °C to 100 °C, for example, 92 °C to 99 °C for 20 seconds to 120 seconds, for example, 30 seconds to 90 seconds. If the blanching is performed under the conditions within the above-described ranges, it is possible to obtain a bagel having excellent chewy and moist texture and excellent flavor.

Sixth, the baking step is a process of baking the blanched dough in an oven.

The oven may use an oven having the bottom made of a steel plate, a stone plate, or a combination thereof, and for example, an oven having the bottom made of a stone plate may be used. If baking is performed in the oven having the bottom made of a stone plate, it is possible to obtain a bagel having excellent appearance and color while maintaining excellent chewy and moist texture and excellent flavor.

The baking process may be performed in an oven at a temperature of 200 °C to 300 °C for 5 minutes to 15 minutes, for example, 6 minutes to 13 minutes. Specifically, conditions of the internal temperature of an oven may be, for example, top heat of 240 °C to 290 °C and bottom heat of 210 °C to 230 °C.

If baking is performed under the conditions within the above-described ranges, it is possible to obtain a bagel having excellent appearance and color while maintaining excellent chewy and moist texture and excellent flavor.

Seventh, the cooling step is a process of cooling the baked dough.

The cooling may be performed at a temperature of 20 °C to 35 °C for 5 minutes to 60 minutes, and for example, may be performed at a temperature of 25 °C to 30 °C for 10 minutes to 60 minutes. If cooling is performed under the conditions within the above-described ranges, it is possible to obtain a bagel having excellent chewy and moist texture and excellent flavor.

A bagel formed by the above-described production method may have excellent chewy and moist texture and flavor as well as excellent appearance and color, and thus may have a high product value.

The bagel produced above may have a moisture content of 30 wt% to 50 wt%, for example, 34 wt% to 45 wt%. A bagel having the moisture content within the above-described range may have excellent chewy and moist texture and flavor.

Hereinafter, specific embodiments of the present invention will be presented. However, the embodiments described below are only for specifically illustrating or describing the present invention, and the present invention should not be limited thereby. In addition, contents not described herein can be sufficiently technically inferred by those skilled in the art, and thus, the description thereof will be omitted.

### Examples 1 and 2 and Comparative Examples 1 and 2

47.39 wt% of flour, 4.74 wt% of refined sugar, 0.47 wt% of sea salt, and 47.4 wt% of hot water of 100 °C were mixed to form tangzhong dough, and then the tangzhong dough was aged at 0 °C for 12 hours to prepare tangzhong.

The tangzhong produced above was mixed with flour, plain flour, refined sugar, sea salt, Sangmi starter (SPC Co.), butter, low-sugar yeast, a processed cereal product, a break improver (Lesaffre Co.), and water in the composition shown in Table 1 below to form bagel dough. In this case, the tangzhong was used in the mixing within 36 hours after the aging of the tangzhong dough. The formed dough was portioned and then molded into a baked shape, and then fermented in a fermentation chamber having a temperature of 28 °C and a relative humidity of 80% in an amount of 90 vol% based on the volume of a finished product. The fermented dough was blanched by being dipped in and out of boiling water of 100 °C for 80 seconds, and then the blanched dough was baked in an oven having the bottom made of a stone plate (top heat of 285 °C and bottom heat of 225 °C) for 8 minutes. Subsequently, the baked dough was cooled to a temperature of 25 °C for 30 minutes to produce a bagel.

For reference, the photograph of a bagel produced according to Example 1 is shown in FIG. 1.

**[Table 1] (unit: wt%**

| | Example 1 | Example 2 | Comparative Example 1 | Comparative Example 2 |
|---|---|---|---|---|
| Tangzhong | 17.6 | 34.9 | 0 | 35.29 |
| Harvest (strong flour) | 41.7 | 33.08 | 50.46 | 33.45 |
| Plain flour | 5.56 | 5.51 | 5.61 | 5.58 |
| Refined sugar | 4.73 | 3.86 | 5.61 | 3.90 |
| Sea salt | 1.14 | 1.05 | 1.23 | 1.06 |
| Sangmi starter | 2.78 | 2.76 | 2.80 | 0 |
| Butter | 2.78 | 2.76 | 2.80 | 2.79 |
| Low-sugar yeast | 0.83 | 0.83 | 0.84 | 0.84 |
| Water quality improver | 0.09 | 0.09 | 0.1 | 0.09 |
| Bread improver | 0.56 | 0.55 | 0.56 | 0.56 |
| Water | 22.23 | 14.61 | 29.99 | 16.44 |

### Reference Example 1

A bagel was produced in the same manner as in Example 1, except that in Example 1, the blanched dough was baked in an oven having the bottom made of a steel plate (top heat of 285 °C and bottom heat of 225 °C) for 8 minutes.

### Evaluation 1: Evaluation of physical properties of bagel

The following physical properties were evaluated for bagels produced in Examples 1 and 2, Comparative Examples 1 and 2, and Reference Example 1, and the results are shown in Table 2 below.

Ametck LLOYD TA1 was used for the measurements, and the experimental conditions were set to a sample height of 20 mm and a compression of 50%.

### Hardness

Hardness is force required to achieve desired deformation, and represents force (gf) required to compress a product between molars, and H1 and H2 are values measured by simplifying a chewing motion and objectifying numerical values regarding characteristics that appear when chewing once and twice, respectively. The higher the H1 and H2 values, the harder it is, following the order of characteristics of hard > solid > soft.

Through Table 2 below, it can be seen that in the cases of Examples 1 and 2 in which tangzhong was used in the production of a bagel according to an embodiment, the H1 and H2 values were lower than those of Comparative Example 1 in which tangzhong was not used and those of Comparative Example 2 in which Sangmi starter was not used, so that a bagel having a soft texture was produced.

### Springiness

Springiness represents properties of a deformed sample to return to its original state after the force is removed. It is also called elasticity, and represents properties of a sample to return to its original state when the force is applied and then removed over time. There are no units associated, and the higher the S value, the more elastic it is, following the order of characteristics of having elasticity > resembling rubber > having no elasticity or being soft.

Through Table 2 below, it can be seen that in the cases of Examples 1 and 2 in which tangzhong was used in the production of a bagel according to an embodiment, the S value was lower than that of Comparative Example 1 in which tangzhong was not used and that of Comparative Example 2 in which Sangmi starter was not used, so that a bagel having limited springiness and being soft, thereby requiring less force when chewing and having a chewy texture was produced.

### Gumminess

Gumminess represents force (gf) required to chew a semi-solid food to the extent that it can be swallowed. The higher the G value, the more gummier it is, following the order of characteristics of gum-like > crunchy > glue-like.

Through Table 2 below, it can be seen that in the cases of Examples 1 and 2 in which tangzhong was used in the production of a bagel according to an embodiment, the G value was lower than that of Comparative Example 1 in which tangzhong was not used and that of Comparative Example 2 in which Sangmi starter was not used, so that a bagel having a texture that dissolves easily in the mouth was produced.

### Chewiness

Chewiness represents force (gf) required to chew a solid food to the extent that it can be swallowed. The higher the C value, the more chewy it is, following the order of characteristics of tough > chewy > soft.

Through Table 2 below, it can be seen that in the cases of Examples 1 and 2 in which tangzhong was used in the production of a bagel according to an embodiment, the C value was lower than that of Comparative Example 1 in which tangzhong was not used and that of Comparative Example 2 in which Sangmi starter was not used, so that a bagel having a chewy texture but not being tough, thereby making it easy to chew was produced.

**[Table 2]**

| | Hardness | | Springiness | Gumminess | Chewiness |
|---|---|---|---|---|---|
| | H1 (gf) | H2 (gf) | S | G (gf) | C (gf) |
| Example 1 | 242.11 | 222.87 | 0.57 | 166.56 | 97.58 |
| Example 2 | 223.53 | 204.13 | 0.35 | 134.45 | 54.15 |
| Comparative Example 1 | 320.15 | 292.32 | 0.64 | 235.71 | 144.90 |
| Comparative Example 2 | 253.86 | 237.49 | 1.04 | 193.91 | 206.52 |
| Reference Example 1 | 192.52 | 178.88 | 0.50 | 135.05 | 73.04 |

As a result, all samples show similar hardness except for Comparative Example 1 in which tangzhong was not used according to an embodiment. Therefore, it can be seen that the use of tangzhong affects the texture of a bagel, and when comparing Example 1 with Example 2, it can be seen that a larger amount of tangzhong makes the texture of a bagel less firm.

In addition, it can be seen that only in the case of a product in which Sangmi starter was not used, that is, Comparative Example 2, the springiness value was large, so that the product in which Sangmi starter was not used had high springiness (toughness). Considering changes in the physical properties that occur while chewing the products from the comparison of gumminess and chewiness between Example 1 and Example 2, it can be determined that Example 2 requires less force and is easier to swallow, as the G and C values are smaller. Through the above physical properties analysis data, the effects of tangzhong and Sangmi starter and the optimal amount of tangzhong content were confirmed. Accordingly, it can be seen that when tangzhong and Sangmi starter are used, a product is soft, has little resistance when chewed, and dissolves well in the mouth, imparting excellent swallowability to the product when consumed.

### Evaluation 2: Evaluation of preference for bagel texture

A texture preference test was conducted on 25 subjects for the bagels produced in Examples 1 and 2, Comparative Examples 1 and 2, and Reference Example 1, and the results are shown in Table 3 below.

**[Table 3]**

| | Preference (ppl) | Contents |
|---|---|---|
| Example 1 | 10 | Soft and chewy texture |
| Example 2 | 5 | Strong chewy texture |
| Comparative Example 1 | 1 | Very soft and having texture similar to that of bread |
| Comparative Example 2 | 4 | Clean taste (bland taste) |
| Reference Example 1 | 5 | Sour flavor |

Through Table 3 above, it can be seen that the bagels of Examples 1 and 2 produced using tangzhong according to an embodiment have higher preference for a chewy texture than the bagel of Comparative Example 1 produced not using tangzhong and the bagel of Comparative Example 2 produced not using Sangmi starter.

### Evaluation 3: Evaluation of moisture activity of bagel

The moisture activity was measured for the bagels produced in Examples 1 and 2, Comparative Examples 1 and 2, and Reference Example 1, and the results are shown in Table 4 below.

The moisture activity (aw) represents a ratio of the water vapor pressure of a food to the water vapor pressure of pure water at a constant temperature.

**[Table 4]**

| | Content of moisture (wt%) | Moisture activity |
|---|---|---|
| Example 1 | 35.02 | 0.92 |
| Example 2 | 35.19 | 0.92 |
| Comparative Example 1 | 34.45 | 0.91 |
| Comparative Example 2 | 36.7 | 0.91 |
| Reference Example 1 | 34.60 | 0.90 |

From Table 4 above, it can be seen that the moisture activity of the bagels of Examples 1 and 2 produced using tangzhong according to an embodiment is slightly higher than that of Comparative Example 1 in which tangzhong was not used. It can be seen that when tangzhong is used, the water binding capacity of a product increases, thereby delaying the aging that occurs during storage.

In addition, in the comparison between Example 2 and Comparative Example 2, the relationship between Sangmi starter and the moisture content of the products can be observed, and it can be seen that the product of Comparative Example 2 in which the Sangmi starter was not used has a higher moisture content but a lower water activity. It can be seen that a product containing Sangmi starter has a high water binding capacity, and thus has a high water-holding capacity, thereby being soft for a longer period of time and having delayed aging.

### Evaluation 4: Evaluation of preference for different ovens in bagel production

A product preference test was conducted on 16 subjects for the bagel of Example 1 produced by being baked in the oven having the bottom made of a stone plate when producing the bagel and the bagel of Reference Example 1 produced by being baked in the oven having the bottom made of a steel plate, and the results are shown in Tables 5 and 6 below.

**[Table 5]**

| | Appearance and color preference (ppl) | Contents |
|---|---|---|
| Example 1 | 13 | Color giving handmade bagel feel, with good appearance, color, and volume |
| Reference Example 1 | 3 | Color similar to that of regular bread, with no distinctiveness |

**[Table 6]**

| | Flavor and texture preference (ppl) | Contents |
|---|---|---|
| Example 1 | 12 | Savory flavor and chewy texture |
| Reference Example 1 | 4 | Sour flavor |

Through Tables 5 and 6 above, it can be seen that the bagel of Example 1 produced by being baked in the oven having the bottom made of a stone plate has higher preference for appearance and color than the bagel of Reference Example 1 produced by being baked in the oven having the bottom made of a stone plate.

Although preferred embodiments of the present invention have been described above, the present invention is not limited thereto, and it is possible to perform various modifications within the scope of the claims, the detailed description of the invention, and the accompanying drawings. It is obvious that the modifications also fall within the scope of the present invention.

### INDUSTRIAL AVAILABLY

The present invention provides a bagel with excellent chewy and moist texture and flavor, and provides a method for producing bagels with excellent appearance and color, and thus can be usefully used in the production of bagels with excellent flavor.

## Claims

1. A method for producing a bagel, the method comprising:
a kneading step of mixing bagel ingredients including tangzhong, flour, sugar, salt, Sangmi starter, butter, yeast, and water to form dough;
a resting step of portioning the dough and then resting the portioned dough;
a shaping step of molding the rested dough into a bagel shape;
a fermentation step of fermenting the molded dough;
a blanching step of blanching the fermented dough in boiling water;
a baking step of baking the blanched dough in an oven; and
a cooling step of cooling the baked dough,
wherein the tangzhong includes flour, sugar, salt, and water.

2. The method of claim 1, wherein the tangzhong is obtained by including the steps of:
mixing the flour, the sugar, the salt, and hot water of 90 °C to 100 °C to form tangzhong dough; and
aging the tangzhong dough at a temperature of 0 °C to 10 °C for 10 hours to 18 hours.

3. The method of claim 2, wherein the tangzhong is mixed into the bagel ingredients within 0 to 48 hours after the aging.

4. The method of claim 1, wherein the tangzhong comprises:
40 wt% to 55 wt% of the flour;
4 wt% to 6 wt% of the sugar;
0.2 wt% to 1 wt% of the salt; and
the remainder being the water.

5. The method of claim 1, wherein the tangzhong is included in an amount of 15 wt% to 40 wt% based on the total amount of the bagel ingredients.

6. The method of claim 1, wherein the Sangmi starter comprises flour, whole wheat flour, yeast, lactic acid bacteria, and water.

7. The method of claim 6, wherein the Sangmi starter comprises:
35 wt% to 45 wt% of the flour;
1.5 wt% to 3 wt% of the whole wheat flour;
0.05 wt% to 0.2 wt% of the yeast;
0.01 wt% to 0.1 wt% of the lactic acid bacteria; and
the remainder being the water.

8. The method of claim 1, wherein the Sangmi starter is obtained by including the steps of:
mixing flour, whole wheat flour, yeast, lactic acid bacteria, and water to form Sangmi starter dough;
fermenting the Sangmi starter dough at a temperature of 25 °C to 29 °C for 4 hours to 8 hours;
cooling the fermented Sangmi starter dough; and
aging the cooled Sangmi starter dough at a temperature of 6 °C to 10 °C for 12 hours to 16 hours.

9. The method of claim 1, wherein the bagel ingredients comprise:
15 wt% to 40 wt% of the tangzhong;
30 wt% to 50 wt% of the flour;
2.5 wt% to 5.0 wt% of the sugar;
0.5 wt% to 1.5 wt% of the salt;
1.5 wt% to 3.5 wt% of the Sangmi starter;
1.5 wt% to 5.0 wt% of the butter;
0.5 wt% to 1.5 wt% of the yeast; and
the remainder being the water.

10. The method of claim 1, wherein the bagel ingredients further comprise a processed cereal product, a bread improver, or a combination thereof.

11. The method of claim 1, wherein the fermentation step performs fermentation on the molded dough in a fermentation chamber to 50 vol% to 100 vol% based on the volume of a finished product, wherein
the fermentation chamber has a temperature of 25 °C to 35 °C and a relative humidity of 30% to 90%.

12. The method of claim 1, wherein the blanching step is a process of dipping the fermented dough in and out of water of 90 °C to 100 °C for 20 seconds to 120 seconds.

13. The method of claim 1, wherein the oven has the bottom made of a steel plate, a stone plate, or a combination thereof.

14. The method of claim 1, wherein the baking step is a process of performing baking in an oven at a temperature of 200 °C to 300 °C for 5 minutes to 15 minutes.

15. The method of claim 14, wherein the baking step is a process of performing baking in an oven at a top heat temperature of 240 °C to 290 °C and a bottom heat temperature of 210 °C to 230 °C.

16. The method of claim 1, wherein the cooling is performed at a temperature of 20 °C to 35 °C for 5 minutes to 60 minutes.

17. A bagel formed according to the method for producing a bagel of any one of claim 1 to claim 16.

18. The bagel of claim 17, wherein the bagel has a moisture content of 30 wt% to 50 wt%.
